# EUROPÄISCHE PATENTSCHRIFT

(11) **EP 1 036 996 B1**
(45) Veröffentlichungstag und Bekanntmachung des Hinweises auf die Patenterteilung: **12.12.2007**
(21) Anmeldenummer: 00105337.0
(22) Anmeldetag: 16.03.2000
(51) Int. Cl.: F24H 1/00, H01M 8/04

(54) **Brennstoffzellen-Heizgerät**
Fuel cell heating device
Appareil de chauffage avec pile de combustion

(30) Priorität: 17.03.1999 AT 46699
(43) Veröffentlichungstag der Anmeldung: 20.09.2000
(73) Patentinhaber: Vaillant GmbH, 42859 Remscheid (DE)
(72) Erfinder: Bielski, Martin, 42859 Remscheid (DE); Thomas, Rolf, 42929 Wermelskirchen (DE)
(74) Vertreter: Hocker, Thomas

(56) Entgegenhaltungen:
- EP-A- 0 486 911
- US-A- 5 041 344

## Beschreibung

Die Erfindung bezieht sich auf ein Brennstoffzellen-Heizgerät gemäß dem Oberbegriff des Anspruches 1. Ein solches Gerät ist z.B. aus Dokument EP 486 911 bekannt.

Bekannte Brennstoffzellenanordnungen werden in der Regel zur Stromerzeugung eingesetzt, wobei die anfallende Wärme in der Regel an die Umgebung abgegeben wird. Dabei ist für den Wechselrichter, bzw. dessen Gehäuse eine eigene Kühleinrichtung vorgesehen. Dies führt dazu, daß für die gesamte Anlage zwei Kühleinrichtungen vorhanden sein müssen.

Ziel der Erfindung ist es diesen Nachteil zu vermeiden und ein Gerät der eingangs erwähnten Art vorzuschlagen, das sich auch für Heizungszwecke eignet und sich durch einen einfachen Aufbau auszeichnet.

Erfindungsgemäß wird dies bei einem Brennstoffzellen-Heizgerät der eingangs erwähnten Art durch die kennzeichnenden Merkmale des Anspruches 1 erreicht.

Durch die Anordnung des Gehäuses des Wechselrichters an einer Endplatte des Stapels eines Plattenwärmetauschers und die Einbeziehung dieser Endplatte in die Kühlung des Stapels erübrigt sich eine separate Kühleinrichtung für das Gehäuse des Wechselrichters.

Außerdem kann dadurch auch die gesamte beim Betrieb des Brennstoffzellen-Heizgerätes anfallende Wärme durch Nutzung der beim Betrieb der Brennstoffzellen und des Wechselrichters anfallenden Wärme für Heizzwecke genutzt werden. Dazu ist es lediglich erforderlich die Brennstoffzellen in einer Weise zu betreiben, daß diese eine ausreichend hohe Temperatur erreichen.

Durch die Merkmale des Anspruches 2 ergibt sich eine in konstruktiver Hinsicht sehr einfache Lösung. Dabei ist auch eine gute Kühlung der Endplatte und damit auch des Gehäuses des aus Leistungshalbleitern aufgebauten Wechselrichters sichergestellt, sodaß auch die Leistungshalbleiter gut gekühlt werden.

Durch die Merkmale des Anspuches 3 ergibt sich der Vorteil, daß die beim Betrieb der Brennstoffzellen und des Wechselrichters anfallende Wärme für Heizzwecke genutzt werden kann.

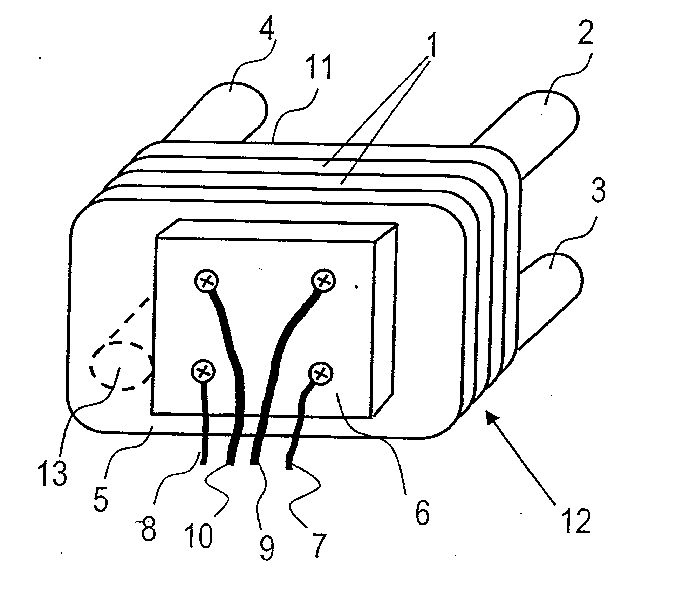

Die Erfindung wird nun anhand der Zeichnung näher erläutert, die schematisch einen Plattenwärmetauscher eines erfindungsgemäßen Brennstoffzellen-Heizgerätes zeigt.

Das Brennstoffzellen-Heizgerät weist einen Plattenwärmetauscher mit einem Stapel 12 von Platten 1 auf, die mit Endplatten 5, 11 versehen sind.

An der Endplatte 5 ist ein Gehäuse 6 eines aus Leistungshalbleitern aufgebauten Wechselrichters befestigt und steht mit der Endplatte 5 in einer gut wärmeleitenden Verbindung.

An der der Endplatte 5 gegenüberliegenden Endplatte 11 sind Rohre 2, 3 angeschlossen, die zur Führung eines Kühlmittels vorgesehen sind.

Das Gehäuse 6 weist Anschlüsse 7, 8 auf, über die die von den nicht dargestellten Brennstoffzellen erzeugte Gleichspannung dem Wechselrichter zugeführt wird, und Anschlüsse 9, 10 auf, über die die Wechselspannung abgenommen werden kann.

Weiter sind an die Endplatte 11 die Rohre 4, 13 angeschlossen, die Teil eines zur Versorgung einer nicht dargestellten Heizkörperanordnung vorgesehenen Kreises sind und zur Führung eines Heizmediums dienen. Beim Betrieb des Brennstoffzellen-Heizgerätes wird die beim Betrieb der Brennstoffzellen und des Wechselrichters anfallende Wärme über das Kühlwasser und das Heizmedium abgeführt und der Heizkörperanordnung zugeführt.

## Patentansprüche

1. Brennstoffzellen-Heizgerät mit einem Plattenwärmetauscher, der einen mit Endplatten (5, 11) versehenen Stapel (12) von Platten (1) aufweist und der mit einer Kühleinrichtung (2, 3) versehen ist, und mit einem in einem Gehäuse (6) angeordneten Wechselrichter, **dadurch gekennzeichnet, daß** der Wechselrichter, bzw. dessen Gehäuse (6) an einer Endplatte (5) des Plattenwärmetauschers befestigt und mit diesem in einer gut wärmeleitenden Verbindung steht, wobei diese Endplatte (5) von einem Kühlmedium durchströmt ist.

2. Brennstoffzellen-Heizgerät nach Anspruch 1, **dadurch gekennzeichnet, daß** zur Führung des Kühlmediums den Stapel (12) durchsetzenden Rohre (2, 3) vorgesehen sind, diese an die Endplatte (2) angeschlossen sind.

3. Brennstoffzellen-Heizgerät nach Anspruch 1 oder 2, **dadurch gekennzeichnet, daß** an die Endplatte (5) Rohre (4, 13) angeschlossen sind, die Teil eines zur Versorgung einer Heizkörperanordnung vorgesehenen Kreises sind.

## Claims

1. A fuel cell heating apparatus having a plate heat exchanger comprising a stack of plates (1) with end plates (5, 11) and provided with a cooling arrangement (2, 3), and further having an inverter arranged in a housing (6), **characterised in that** the inverter, that is to say the housing thereof, is attached to an end plate (5) of the plate heat exchanger in such a manner that good heat conduction is ensured, with a cooling medium flowing through the said end plate (5).

2. A fuel cell heating apparatus as claimed in Claim 1, **characterised in that** pipes (2, 3) for the cooling medium are provided which extend through the stack (12) and are connected to the end plate (5).

3. A fuel cell heating apparatus as claimed in Claim 1 or 2, **characterised in that** pipes (4, 13) are connected with the end plate (5), which are part of a circuit for supplying a radiator arrangement.

## Revendications

1. Système de chauffage à piles à combustible avec un échangeur de chaleur à éléments plats qui comprend un ensemble (12) d'éléments plats (1) muni d'éléments d'extrémité (5, 11) et qui est muni d'un équipement refroidissant (2, 3) et d'un onduleur installé dans un boîtier (6), système de chauffage **caractérisé par** les faits que l'onduleur, c'est-à-dire son boîtier (6) est monté sur un élément d'extrémité (5) de l'échangeur de chaleur à éléments plats, auquel il est relié effectivement, cet élément d'extrémité (5) étant parcouru par un agent réfrigérant.

2. Système de chauffage à piles à combustible suivant la revendication 1, **caractérisé par le fait que** des tubes (2, 3) traversant l'ensemble (12) sont prévus pour canaliser l'agent réfrigérant, et reliés à l'élément d'extrémité (5).

3. Système de chauffage à piles à combustible suivant la revendication 1 ou 2, **caractérisé par le fait que** des tubes (4, 13) sont reliés à l'élément d'extrémité (5), et qui font partie d'un circuit prévu pour l'alimentation d'un ensemble de corps de chauffe.
